# EUROPEAN PATENT SPECIFICATION

(11) **EP 0 356 462 B1**
(45) Date of publication and mention of the grant of the patent: **29.09.1993**
(21) Application number: 88904796.5
(22) Date of filing: 11.04.1988
(51) Int. Cl.: B22F 3/22, C04B 35/00

(54) **COMPLEX CERAMIC AND METALLIC SHAPES BY LOW PRESSURE FORMING AND SUBLIMATIVE DRYING**
KOMPLEXE KERAMISCHE UND METALLISCHE FORMKÖRPER DURCH NIEDERDRUCK-FORMGEBUNG UND TROCKNEN DURCH SUBLIMATION
FORMES CERAMIQUES ET METALLIQUES COMPLEXES REALISEES PAR FORMAGE A BASSE PRESSION ET SECHEES PAR SUBLIMATION

(30) Priority: 09.04.1987 US 36085; 25.11.1987 US 125643
(43) Date of publication of application: 07.03.1990
(73) Proprietor: CERAMICS PROCESS SYSTEMS CORPORATION, Milford, MA 01757 (US); Metals Process Systems, F-92100 Boulogne-Billancourt (FR)
(72) Inventor: SUNDBACK, Cathryn, A., Harvard, MA 01451 (US); NOVICH, Bruce, E., Lexington, MA 02173 (US); KARAS, Angelica, E., Arlington, MA 02174 (US)
(74) Representative: Overbury, Richard Douglas
(86) International application number: US8801259
(87) International publication number: WO8807903

(56) References cited:
- EP-A- 161 494
- GB-A- 2 163 780
- US-A- 3 330 892
- US-A- 4 734 237
- CHEMICAL ABSTRACTS, vol. 98, no. 20, 16 May 1983, Columbus, OH (US); p. 312, no. 165877c#
- PATENT ABSTRACTS OF JAPAN, vol. 8, no. 186 (M-320)(1623), 25 August 1984#

## Description

The present invention relates to forming complexly shaped articles by freeze-forming a non-aqueous slurry of inorganic solids, generally ceramic and/or metallic, by molding the slurry into a desired shape and then drying the frozen shape by non-destructive evaporation/sublimation to provide a green article with adequate green strength. The forming operation can be performed under low pressure and the green article can be conventionally sintered.

Complexly shaped, three-dimensional, high performance ceramic parts are essential structural and electronic components for a wide variety of industrial applications. High performance properties are, for example, strength, toughness, uniformity, surface finish, resistivity, optical properties, and thermal expansion. These and other properties are markedly affected by the quality of the starting material and the manner in which it is processed. Factors that have limited the production of advanced ceramics for high performance applications are (i) poor strength and reliability, stemming from poor raw material quality and improper processing techniques, and (ii) high cost, stemming from low product yields, long processing cycle times, and high capital equipment expenditures.

For example, a high strength, high performance alumina article is one which can be characterised by a fully densified body homogeneously composed of uniform submicron alumina grains. If a processing step introduces a texture or a defect of a critical size into the microstructure, a strength limiting flaw will have been created and will result in a severe departure from the intrinsic or high performance properties desired. Historically, ceramics have not been used for high performance applications due to poor starting materials and the incorporation of property limiting defects through inadequate processing, both as mentioned above. Only recently has the ceramics community recognised the importance of both the starting materials and the processing techniques on the properties of the article produced.

Typically, three-dimensional complexly shaped ceramic parts are manufactured by a process analogous to thermoplastic injection molding, in which a ceramic or metallic powder is compounded with a mixture of thermoplastic resins at high torque and at high temperature. The resulting mixture has a dough-like consistency, which is why the compounding process is generally referred to as "kneading". Homogeneous particle dispersion is difficult and tedious to obtain in such a system, and traditionally has been a source of microstructural defects, such as holes and non-uniform particle packing. The mixture is then fed into a high pressure injection molding machine, usually in the form of granules or pellets. The molding machine and the molds used are typically large and expensive because injection pressures can range from approximately 2500 psi to 30,000 psi, (1.72 x 10⁷ Pa to 2.07 x 10⁸ Pa), thus requiring mold clamping forces in the "tens of tons" range. As the pellets are fed into the injection molding machine, they are remelted and injected through a sprue into a mold cavity. The high viscosity and dough-like consistency of the molding composition can result in weld or knit lines, mold gate, sprue, and parting line textures, all of which can create property limiting defects. After the part is molded, the thermoplastic/ceramic composition is subjected to binder removal, which is a long (typically requiring days), expensive, and deleterious process, particularly for a fine particle matrix typical of a high performance ceramic body. Initially, binder removal can result in bubble formation, delamination, and blistering of the part (as typically, 40% by volume of the composite is a plastic material which is removed from a finely porous body). Binder removal is commonly practised by heating the polymer/ceramic composite beyond the polymer softening point; accordingly, dimensional tolerance is difficult to control because of fluids escaping from the softening composite matrix, which often coincides with the development of internal pressures due to gasification of the polymer (by vaporization or pyrolysis reactions). After binder removal, the porous particulate body is sintered at high temperatures so that the particulates can fuse together, thereby resulting in a dense, strong ceramic that is approximately 20% smaller than the presintered (green) particulate part. Final machining is generally required due to poor dimensional tolerances, parting lines, and gate remnants remaining on the fired part. Moreover, this machining process commonly imparts defects to the fired part, thereby creating property limiting, especially strength limiting, defects.

An alternative approach to thermoplastic resin molding has been to substitute low temperature melting, low viscosity waxes in place of the thermoplastic resins also for low pressure injection molding; yet problems remain, such as those associated with dispersion, binder removal, machining, green strength, and dimensional tolerance.

Historically, investigators have recognised the limitations that the binder has placed on the processing of complexly shaped, three-dimensional parts. The art later began to understand and appreciate that the binder, which had allowed the ceramic and metal particles to be formed into a shape and later handled, was also the cause of many economic and performance problems. Rivers, US Pat. No. 4,113,480, developed an aqueous-based injection molding process exclusively for metal powders using 1.5 to 3.5 wt.% (metal powder basis) of high viscosity methylcellulose additive to provide green strength. The resulting mixture of metal powder, water, and methylcellulose has a "plastic mass" consistency and can be injection molded at 8,000 psi (5.52 x 10⁷ Pa). The molded mass is then thermally dried and the green part is conventionally sintered. Although binder burnout was eliminated by this particular process, defects still remain, as well as the costs associated with dispersion and molding of a high viscosity mix and the implementation of a necessary but difficult thermal drying step.

The use of a molding vehicle which could be frozen has been investigated as an alternate method for casting or molding without the use of thermoplastic carriers. Sublimative drying by freeze drying (lyophilization) has been shown to be less destructive to the particle fabric in the green article during drying. A. Kwiatkowski et al., "Preparation of Corundum and Steatite Ceramics by the Freeze Drying Method," Ceramurgia International, vol. 6, no. 2, pp. 79-82 (1980). Such a method has been described by Nesbit, US Pat. No. 2,765,512, which describes casting a ceramic shape from a thick slip containing a hydrogen bonding medium (such as water), a cryoprotectant, and ceramic particles which are then frozen into a shape while in the mold. The resulting frozen part was demolded, dried at room temperature and pressure, and subsequently fired. Downing et al., US Pat. No. 3,885,005, has cast coarse grained refractory shapes from a slip containing 70% coarser than #200 mesh ceramic particles, water, and a silica sol binder. The resulting cast shape was subsequently frozen, causing the silica to gel and cementing the refractory particles together. The residual water was frozen and the part was demolded and heated to 200°F (93.5°C) to thaw and dry the part. Tomilov, G.M., and T.V. Smirnova, "Molding Quartz-Ceramic Articles Using an Aqueous-Slip Freezing Method," Glass & Ceramics, no. 10, pp. 655-6 (1977) also describe freeze molding a ceramic part that is later dried by the application of heat.

Dennery et al., US Pat. No. 3,567,520, in making metal parts from powdered metals, formed an aqueous-based paste sheet into a part, which was then frozen at -60°F (-51°C), and subsequently freeze dried to overcome thermal drying stresses which would be destructive to the part. Maxwell et al., US Pat. No. 2,893,102, cast and molded thicker parts from an aqueous ceramic slip in which the slip and mold were frozen in a CO₂ bath followed by freeze drying and sintering.

As a slight departure from the art thus described, Weaver et al., US Pat. No. 4,341,725, described the use of a cryoprotectant as an additive in a hydrogen-bonding suspension medium to inhibit ice crystal growth, which, after drying, can cause severe strength limiting defects. Weaver et al, claim that the foregoing prior art would result in "low performance" articles riddled with scars resulting from ice crystal formation. By using hydrogen bonding additives in a hydrogen bonding medium, Weaver et al, claimed to limit the size of ice crystals formed to those of the order of 20-50 microns (2.0 - 5.0 x 10⁻⁵m).

Takahashi, in European Pat. Applications Nos. 160,855 and 161,494, describes a method for freeze-pressure molding inorganic powders. That method includes providing a flocculated feedstock, shaping the feedstock under high pressure (at least about 2800 psi (1.9 x 10⁷ Pa) (200 kg_{f}/cm²)), consolidating the shaped feedstock (including removing a portion of the fluid medium), and freezing under pressure to form a frozen shape; the resulting shape is dried, such as by freeze drying, and then conventionally sintered. Besides the necessity for high pressure forming and consolidation, the Takahashi process has another disadvantage of being limited to particles having a size not greater than about 1 (one) micron (10⁻⁶m). In general, a perusal of these two European patent applications shows that the process is designed to overcome or avoid volume expansion on freezing by the use of mechanical means. Still further, Takahashi achieves what is termed a "high density" article, which for alumina is disclosed to be about 85% of theoretical, far below the 98+% of theoretical density typical for high performance alumina applications.

In US Pat. No. 3,330, 892 Herrman et al., describes a process for forming sintered articles from a molded mixture of an inorganic powder and a molten organic binder. The organic vehicle is solid at room temperature and is heated to a temperature above its melting point to facilitate mixing with the inorganic powder.

According to the present invention there is provided a process for forming an article comprising the steps:
(a) providing a well dispersed slurry comprising inorganic sinterable particulates, a non aqueous vehicle and a dispersant,
(b) shaping the slurry,
(c) decreasing the temperature to form the shaped slurry into a solidified piece,
(d) demolding and drying the resultant solidified piece to form a green article, and
(e) sintering the green article to form the desired article characterised in that the slurry contains at least 35% by volume of inorganic sinterable particulates and has a viscosity of not more than 1.0 Pas at 100 S⁻¹, in that the slurry is shaped at a pressure of not more than 6.9 x 10⁶ Pa and in that the volume change on freezing is not more than ±10% whereby the density of the sintered article is at least 95% of the theoretical density.

In one embodiment, the slurry is injected into a mold which is already chilled to below the freezing point of the vehicle. Other embodiments include the use of a vehicle that is normally solid at ambient conditions as well as the use of concurrent sublimation and evaporation to dry the solidified piece.

A feature of this process is the ability to use fine particulates (e.g., submicron), which allows for sintering at lower temperatures due to the density and uniformity of the green article. Further, the present process allows for the elimination of the conventional binder removal step and, because the green article can be formed to a high dimensional tolerance, reduces or eliminates the machining steps; both of these steps are traditional sources for defects which lead to non-uniformity of the final part. Still further, articles having larger cross-sections can be made using the present invention while also attaining a high surface detail replication and resolution. Another advantageous feature of the invention is the ability to form a green article having sufficient green strength for handling and demolding.

Other features of the present invention, especially relating to the use of a non-aqueous vehicle, include facile mold release; less or no volume expansion upon freezing; the capability of higher (and broader range of) molding, freezing, and drying temperatures; faster drying; and the ability to process materials incompatible with water. Although not all non-aqueous vehicles will exhibit all of these features, even singly these features are important and beneficial considerations for providing an economically feasible processing system.

Further features of the invention are derived from the capacity to form the slurry under lower pressures, less than 1000 psi (6.9 x 10⁶ Pa) and down to 100 psi (6.9 x 10⁵ Pa) or even less. Such features include lower equipment costs for tooling of the molds and the injection machines and reduced mold wear. In general, the capacity to inject at low pressure provides for an easier and a more timely, efficient process.

The present invention also provides a ceramic or metallic article having a uniform, homogeneous composition, a smooth texture-free surface finish, a dense or uniformly porous defect-free microstructure, a texture-free surface, and a high dimensional tolerance. In essence, this invention provides the ability to control defects on a particle size scale, in contrast to the 20-50 micron (2.0 - 5.0 x 10⁻⁵m) defects with which the art has typically been concerned. The invention is described below in more detail with respect to various specific embodiments.

The present invention is a departure from co-pending US Pat. Application Serial No. 125,643, filed Nov. 25, 1987, and the corresponding European (PCT) application (publication no. 0356461), the disclosure of which is herein incorporated by reference. That invention is specifically directed to aqueous systems which include a cryoprotectant and a dispersant.

The present invention is particularly directed to non-aqueous systems for forming complexly shaped ceramic and metallic parts from a low pressure injectable slurry. In general, the slurry is composed of sinterable inorganic particulates, a vehicle, and a dispersant.

The sinterable particulates can be ceramic, metallic, or a combination of the two. Exemplary ceramic compositions include, but are not limited to, the oxides, carbides, nitrides, silicides, borides, silicates, titanates, zirconates, and the like and mixtures thereof, of aluminium, barium, beryllium, boron, calcium, lanthanum, lead, silicon, tungsten, titanium, zirconium, and mixtures thereof. Exemplary metallic compositions include, but are not limited to, aluminum, nickel, iron, titanium, copper, tungsten, molybdenum, beryllium, and mixtures and alloys thereof, such as steels (e.g., stainless, low alloy, copper, silicon, and the like), brasses, bronze, and so forth.

The particulates preferably have a particle size range of from about 0.1 micron (0.1 x 10⁻⁶m) to about 150 microns (1.5 x l0⁻⁴m) (about 100 mesh), although we have molded both finer and coarser particulates using the present invention. The surface area of the particulates can be from less than 1 m²/g to more than 100 m²/g (B.E.T.), with no more than about 25 m²/g preferred.

For the sake of simplicity, the term "ceramics" will be used to illustrate the invention, and it is to be understood that that term connotes both ceramic and metallic particulates as well as mixtures thereof; thus, the present invention also contemplates the production of composite structures. Of course, a densified article formed from a metal powder will be a metal, not a ceramic, and the sintering conditions for various metal and ceramic compositions, although readily determinable by one of the ordinary skill from literature references, will depend upon the particular composition. Nevertheless, the present invention is applicable to forming dense articles from inorganic powders, which are preferably metallic, ceramic, or mixtures thereof.

The vehicle is non-aqueous and is preferably liquid at the desired batching and forming stages of the unit operations. Nevertheless, as explained more fully below, the vehicle may be a solid at ambient temperature and pressure, in which case a fluid slip is formed by heating the mixture of the vehicle, particulates, and dispersant. The vehicle should be compatible with the particulates both chemically and to avoid flocculation; the vehicle should also be compatible with the dispersant. These are sufficient criteria for producing an injectable slip; however, as discussed below, other criteria become factors in other aspects of this invention.

While this invention is illustrated primarily by the examples below, exemplary vehicles include, but are not limited to, propanal, methyl ethyl ketone, cyclohexanone, methanol, ethanol, propanol, glycerol, neopentyl alcohol, formic acid, formamide, pyridine, dioxane, methane (including clathrate), ethane, butane, isobutane, hexane, cyclohexane, acetonitrile, acetamide, epsilon caprolactam, crotonic acid, phenol and compatible mixtures thereof, which are compatible with the powder.

The dispersant can be any one of a number of well-known dispersants, and is typically chosen empirically for a given system. There are a number of diverse dispersants we have found to work well, including, but not limited to acrylic acid-based polymeric polyelectrolytes (e.g., EMCOL CC-55, a cationic polypropoxy quaternary ammonium acetate, available from Witco Chem. Co., Perth Amboy, NY), oxidized triglycerides (e.g., fish oil, although quality control varies significantly), sorbitan esters (e.g., SPAN 85, a sorbitan trioleate, available from ICI Americas, Wilmington, DE, and sorbitan monooleate), phosphate ethers (e.g., GAFAC RE-610, an anionic polyoxyethylene nonylphenyl ether phosphate, available from GAF, Wayne, NJ), and diesters (e.g., AEROSOL OT, a dioctyl ester of sodium sulfosuccinic acid, available from American Cyanamid, Danbury, CT), and the like. Other dispersants include amine oxides, alkyl betaines, silicon-based compounds (e.g., gamma-aminopropylmethoxy silane), and similar compounds which are inert with respect to the ceramic and/or metallic composition. The dispersant is present in an amount effective to provide a well-dispersed system. Generally, this results in about 0.5 to about 5.0 wt.% dispersant in the slurry, more preferably in the approximate range of 1.5 to 2.7 wt.%.

The slurry may also optionally include an internal demolding lubricant. Such mold release agents include compounds such as oleic acid, stearic acid, waxes such as polyethylene glycol, and the like and mixtures thereof. Such compounds are conventional in the art, and if used herein, should be compatible with the other slurry components. If used, the mold release agent is preferably present in amounts of from about 1 to about 3 vol.%.

The slurry may also include a conventional sintering aid, such as yttria, magnesia, ceria, and the like, depending upon the specific particulate composition or mixture. For example, 2 to 3 wt.% of Y₂O₃. for AIN powder, based on the amount by weight of particulates, may be present.

In general, the three components are mixed under high shear rate to disperse the particulates into primary particulates and to provide an injectable slip; the particulates are well-dispersed when they are present in the slurry as primary particulates (as opposed to agglomerates and flocs). The particulate materials are present in the slip in an amount of at least 35 vol.%, preferably at least 35-50 vol.%. Mixing under high shear rate can be accomplished by the use of a dispersing device, preferably a conventional milling apparatus such as a Sweco mill (available from Sweco, Inc., Los Angeles, CA). The slip viscosity is expected to be no more than, 1000 cP (1.0 Pas), and preferably (such described in some of the following examples) down to less than 100 cP (0.1 Pas). Nevertheless, it is sufficient if the slurry is injectable at pressures less than about 1000 psi (6.9x10⁻⁶ Pa). Other methods for producing slurries are described in co-pending U.S. patent application serial numbers 856,803, filed April 25, 1986, 036,377, filed April 9, 1987, and 045,684, filed May 1, 1987, the disclosures of which are incorporated by reference herein.

The injectable slip is then made into a desired shape. More particularly, this operation includes the steps of providing a quantity of the slip in a desired geometry and of fixing that geometry; the former operation will be termed forming and the latter will be termed solidifying. However, it should be noted that these operations are not necessarily discrete and that one may accompany the other in whole or in part.

In view of the low, injectable viscosity of the slip, it can be formed under low or zero (gauge) pressure into a desired geometry. For example, the slip can be cast, such as by tape casting, or it can be injection molded. Conventional thermoplastic injection molding technology considers "low pressures" to be in the vicinity of about 5000 psi (3.5x10⁷ Pa). For ceramics, a low pressure (about 100 psi (6.9x10⁵ Pa)) process is discussed by Anders F. Henriksen in "Manufacturing Intricately Shaped Oxide Ceramics Using Low Pressure Injection Technique," Advanced Ceramics '87 Conference Papers as sponsored by Soc. of Mfg. Eng., no. EM87-104 (1987). That process includes providing a slip composed of ceramic particulates, a surfactant, and a molten wax, and keeping the slip agitated to render it in a state of a high viscosity fluid, qualitatively described as having a viscosity somewhere between that of a thick latex paint and that of taffy; the was is removed from the solidified piece by an undisclosed, proprietary process.

For the purposes of the present invention, low pressures include those from about 1000 psi (6.9x10⁶ Pa) down to about atmospheric pressure (1.0x10⁵ Pa), the latter being essentially zero pressure forming. The ability to form under low pressure, as discussed above, provides economic advantages by alleviating the requirement for more expensive, high pressure equipment and the more expensive tooling required for such apparatus. In addition, an injectable slip facilitates mold filling and thus is beneficial to producing as-molded complex shapes.

After the slurry is formed (i.e., a desired quantity of slurry is shaped into a desired geometry), the formed slurry is fixed into that geometry by solidifying the non-aqueous vehicle. There are various embodiments of solidification, including chilling a mold into which the slip was previously injected and injecting the slip into a chilled mold, the latter being a preferred embodiment. As used herein, the term chilling means providing a temperature below the freezing point of the vehicle. In an embodiment where the vehicle is solid at ambient conditions (or any other desired reference conditions), such as neopentyl alcohol, the vehicle, and hence the slurry, can be made liquid by applying heat. Then, for example, the "molten" slurry can be injected into a heated, closed mold and solidification can be accomplished by removing the heat source, i.e., chilling the mold. In any embodiment, the result of the solidification subprocess is a solidified piece; as distinguished from a green article, the solidified piece still includes the vehicle, although predominantly as a solid phase. Also, it is preferred to have the solidification rate as fast as is reasonably possible, because this increases the overall process rate and, although not desirous of being constrained to a particular theory, appears to reduce defects induced by solidification.

At this juncture, there are a few aspects of the forming and solidifying subprocesses worth noting. The solidified piece may not be fully "frozen"; that is, there may be micropockets of vehicle present as liquid. While not desirous of being constrained to a particular theory, it is believed that the injectable and injected slurry may be well-dispersed on the macro and mini scales, but on the micro scale (e.g., on the particle diameter scale) there may be localized surface chemistry, and thus in the continuous phase there may be different localized surface chemistry that allows for the formation of micropockets of liquid. What is important is that these micropockets are well-dispersed in the solidified piece. Additionally, although not desirous of being constrained to a particular theory, it is believed that the freezing rate has an effect on the distribution of these micropockets as well as on the microstructure of the solidified and the resulting green article. However, this must also be considered with our observations that an acceptable freezing rate is a function of the volume fraction of solids, and that a higher solids loading can tolerate a slower freezing rate without the occurrence of defects in the green article, although liquid micropockets may still be created.

In any event, the solidified piece has an essentially uniform composition (including both the amounts of particulates, vehicle, and dispersant, as well as the various phases of the vehicle if a second, liquid phase exists to any appreciable degree) and can be easily handled. Another aspect of the invention is that these two subprocesses (forming and solidification) can be performed in a closed mold (i.e., essentially a closed volume except for vents to allow for the escape of air during molding). Even though there may be some volume change on freezing, which may even be as great as about ± 10 vol.%, the solidified piece can be dried and sintered, which is indeed surprising given what those such as Weaver et al. suggest.

The solidified piece is then demolded and dried. The drying subprocess is essentially the non-destructive sublimation of the vehicle. However, as noted previously, the vehicle may not be fully solidified. Accordingly, some evaporation of the vehicle may accompany the sublimative drying. In addition, if a two- or multi-component vehicle is used, depending upon the drying conditions, certain components may preferentially melt and evaporate rather than sublimate. Drying is accomplished in an environment having a reduced pressure and having, within the environment, a condenser at a temperature below the freezing point of the vehicle. The rate of freeze drying is effected by the geometry and thickness of the piece (e.g., a tape will dry faster than a sphere for the same system), the condenser temperature (the lower the temperature below the freezing point of the vehicle, the faster the rate), the heat of sublimation of the vehicle (including the heat of melting and/or the heat of evaporation if there is concurrent evaporation), the vapor pressure of the vehicle at the temperature of the solidified piece, the average pore size of the piece (affecting mass transport of vehicle through to the surface of the piece), and other similar factors. In accordance with the foregoing discussions, there may be some systems where it would be advantageous to perform the processing at elevated temperatures and pressures and then perform the sublimative drying subprocess at ambient temperature and pressure. Accordingly, the present drying subprocess includes what is conventionally termed "freeze drying" and, more broadly, includes the predominantly sublimative removal of the essentially solidified vehicle regardless of the prevailing temperature and pressure. Additionally, because the forming can be accomplished in a closed mold, the drying subprocess can be accomplished with the solidified piece still in the mold. Also, although not desirous of being constrained to a particular theory, it is believed that the dispersant (which does not sublime or evaporate to any appreciable degree) acts as a green strength and toughness enhancer, even though it is present in amount significantly less than a conventional binder would be present (e.g. 2 wt.% in the present invention as opposed to 35 wt.% for a conventional polymeric binder).

The foregoing, then, generally describes our invention. We have also discovered that this invention is capable of producing high performance ceramic and metallic parts; a high performance part, as mentioned above, should exhibit characteristics approaching those intrinsic to the material. The present invention can produce articles having a density of 95% (even 99%) theoretical and with no pores of a size greater than about 20 micrometers (2.0 x 10⁻⁵m), thereby providing a high performance article having high strength. High dimensional tolerance is another high performance property, and the present invention can provide articles having a dimensional tolerance of <±0.5% and an as-molded surface roughness of <80 microinches (about 2.03 micrometers (2.03x10⁻⁶m). Yet another high performance property is thermal shock resistance, which is improved by compositional uniformity, which is achieved by the present invention by starting with a well-dispersed slurry and the proper processing thereof.

In any embodiment, the resulting dried, green article can be conventionally sintered. Such techniques, including sintering times, temperatures, and atmospheres, are well-known or easily determinable by a ceramist or metallurgist (for metal powders) of ordinary skill in the art.

The invention is further illustrated by the following examples.

### EXAMPLE 1

This example describes the production of a four-vane rotor about 2.0" (0.05m) in dia. and about 2.0" (0.05m) high. The rotor geometry includes a hollow conical hub to which four helically shaped vanes are attached, having a 90° angle between their leading and tailing edges' the vanes have a cross sectional thickness of about 0.25" (6.4x10⁻³m) tapering to about 0.125" (3.2x10⁻³m) at their outer edges.

The inorganic particulate was aluminium nitride powder (designated Grade C, available from Hermann C. Starck, Niederlassung Laufenberg, Berlin, Germany; impurities include N 29.9%, C 0.1%, O 1.6% and Fe 0.05%) and was used as received. the powder had a particle size range of about 2-4 microns (2.0x10⁻⁶ to 4.0x10⁻⁶m) and a B.E.T. surface area of about 4-8 m²/g. This powder, plus 2 wt.% (powder basis) of a dispersant (EMCOL CC-55, described above) and 2 wt.% of a sintering aid (yttria, described above), were mixed with cyclohexane overnight on a roller mill (end-over-end) to provide a slurry having a solids content of about 50 vol.% and a viscosity of about 650 cP (0.65 Pas) at 100 s⁻¹. After batching and milling, the pourable suspension was de-aired and injected at about 20 psi (1.4x10⁵Pa) into a closed, fixed volume steel mold that was previously chilled to -78°C. Within a few minutes the suspension was solidified and was easily de-molded and handled. The solidified piece was dried in a freeze dryer having a condenser temperature of less than -40°C and in a drying environment at about 100 millitorr 13.3 Pa to produce a green article, which was subsequently sintered at about 1800°C for about 2 hours under a nitrogen gas atmosphere. The sintered article had a uniform grain size and a density of >99% theoretical (3.24 g/cm³), and exhibited about 24.6% x-y shrinkage and about 24.4% z shrinkage.

### EXAMPLE II

The procedure of Example I was repeated, using about 60 vol.% neopentyl alcohol ((CH₃)₂CCH₂OH) as the vehicle (a solid at room temperature; T_{m.p.} = 52°C), about 40 vol.% alumina powder as the inorganic particulate (having an average particle size of about 0.3 to about 0.5 micrometers (0.3x10⁻⁶ to 0.5x10⁻⁶m) and having a standard deviation of less than about 50% of the mean particle size (available under the designation CPS-X from Ceramics Process Systems Corp. Cambridge, MA), and about 2 wt.% dispersant (EMCOL CC-55, as described above). The system was formed at room temperature and was dried, under vacuum, at room temperature. The green article remained intact and was sintered to 98% of theoretical density.

### EXAMPLE III

The procedure of Example I was repeated using about 45 vol.% of stainless steel powder as the inorganic particulate (designated Special Steel Powder 316, available from Pacific Metals Co. Ltd., Tokyo, Japan), about 2 wt.% dispersant (EMCOL CC-55, as described above), and about 55 vol.% cyclohexane as the vehicle. The green article was intact and was sintered to >95% of theoretical density.

## Claims

1. A process for forming an article comprising the steps:
(a) providing a well dispersed slurry comprising inorganic sinterable particulates, a non aqueous vehicle and a dispersant,
(b) shaping the slurry,
(c) decreasing the temperature to form the shaped slurry into a solidified piece,
(d) demolding and drying the resultant solidified piece to form a green article, and
(e) sintering the green article to form the desired article characterised in that the slurry contains at least 35% by volume of inorganic sinterable particulates and has a viscosity of not more than 1.0 Pas at 100 S⁻¹, in that the slurry is shaped at a pressure of not more than 6.9 x 10⁶ Pa and in that the volume change on freezing is not more than ±10% whereby the density of the sintered article is at least 95% of the theoretical density.

2. A process as claimed in claim 1, wherein the slurry is shaped by injection molding.

3. A process as claimed in claim 1 or 2, wherein the particulates are present in an amount of from 35 to 50 v/o.

4. A process as claimed in claim 1, 2 or 3, wherein the density of the sintered article is at least about 99% of theoretical.

5. A process as claimed in claim 1, 2, 3 or 4, wherein the particulates are selected from; the oxides, carbides, nitrides, silicides, borides, silicates, titanates, zirconates, and mixtures thereof, of aluminium, barium, beryllium, boron, calcium, lanthanum, lead, silicon, tungsten, titanium, zirconium, and mixtures thereof.

6. A process as claimed in claim 1, 2, 3 or 4, wherein the particulates are selected from; aluminium, nickel, iron, titanium, copper, tungsten, molybdenum, beryllium, and mixtures and alloys thereof.

7. A process as claimed in any preceding claim, wherein the non-aqueous vehicle is selected from; propanal, methyl ethyl ketone, cyclohexanone, methanol, ethanol, propanol, glycerol, neopentyl alcohol, formic acid, formamide, pyridine, dioxane, methane (including clathrate), ethane, butane, isobutane, hexane, cyclohexane, acetonitrile, acetamide, epsiloncaprolactam, crotonic acid, phenol and mixtures thereof.

8. A process as claimed in any preceding claim, wherein the dispersant is selected from; acrylic acid-based polymeric polyelectrolytes, oxidised triglycerides, sorbitan esters, phosphate ethers, succinic acid diesters, amine oxides, alkyl betaines, silicon-based compounds, and mixtures thereof.

9. A process as claimed in any one of claims 1 to 7, wherein the dispersant is selected from; a cationic polypropoxy quaternary ammonium acetate, fish oil, sorbitan trioleate, sorbitan monooleate, an anionic polyoxyethylene nonylphenyl ether phosphate, a dioctyl ester of sodium sulfosuccinic acid, gamma-aminopropylmethoxy silane, and mixtures thereof.

10. A process as claimed in claim 2, or any of claims 3 to 9 when dependant on claim 2, wherein the temperature of the mold is decreased prior to the injection of the slurry.

11. A process as claimed in any preceding claim, wherein the slurry further includes a demolding lubricant.

12. A process as claimed in claim 11, wherein the lubricant is selected from; oleic acid, stearic acid, polyethylene glycol, and mixtures thereof.

13. A process as claimed in any preceding claim, wherein the dispersant is present in an amount of from about 0.5 wt.% to about 5.0 wt.% of the slurry.

14. A process as claimed in any preceding claim, wherein the slurry further includes a sintering aid.

15. A process as claimed in any preceding claim, wherein the particulates have a size of from 0.1x10⁻⁶ to 150x10⁻⁶m.

## Patentansprüche

1. Verfahren zum Bilden eines Gegenstandes, umfassend die Schritte
a) des Bereitstellens einer gut dispergierten Aufschlämmung, die anorganische sinterfähige Teilchen, einen nicht-wäßrigen Träger und ein Dispergiermittel umfaßt,
b) des Formens der Aufschlämmung,
c) des Erniedrigens der Temperatur, um aus der geformten Aufschlämmung ein verfestigtes Stück zu bilden,
d) des Entformens und Trocknens des resultierenden verfestigten Grünlings und
e) des Sinterns des Grünlings zur Bildung des gewünschten Gegenstandes,
**dadurch gekennzeichnet, daß** die Aufschlämmung wenigstens 35 Vol.-% anorganische sinterfähige Teilchen umfaßt und eine Viskosität von nicht mehr als 1,0 Pa·s bei 100 s⁻¹ hat, daß die Aufschlämmung bei einem Druck von nicht mehr als 6,9 × 10⁶ Pa geformt wird und daß die Volumen-Änderung beim Einfrieren nicht mehr als ±10 % beträgt, wobei die Dichte des gesinterten Gegenstandes wenigstens 95 % der theoretischen Dichte beträgt.

2. Verfahren nach Anspruch 1, worin die Aufschlämmung durch Spritzgießen geformt wird.

3. Verfahren nach Anspruch 1 oder 2, worin die Teilchen in einer Menge von 35 bis 50 Vol.-% vorhanden sind.

4. Verfahren nach Anspruch 1, 2 oder 3, worin die Dichte des gesinterten Gegenstandes wenigstens 99 % der theoretischen Dichte beträgt.

5. Verfahren nach Anspruch 1, 2, 3 oder 4, worin die Teilchen aus den Oxiden, Carbiden, Nitriden, Siliciden, Boriden, Silicaten, Titanaten, Zirconaten, und deren Gemischen, von Aluminium, Barium, Beryllium, Bor, Calcium, Lanthan, Blei, Silicium, Wolfram, Titan, Zirconium und deren Gemischen ausgewählt sind.

6. Verfahren nach Anspruch 1, 2, 3 oder 4, worin die Teilchen aus Aluminium, Nickel, Eisen, Titan, Kupfer, Wolfram, Molybdän, Beryllium und deren Gemischen und Legierungen ausgewählt sind.

7. Verfahren nach irgendeinem vorhergehenden Anspruch, worin der nicht-wäßrige Träger aus Propanal, Methylethylketon, Cyclohexanon, Methanol, Ethanol, Propanol, Glycerol, Neopentylalkohol, Ameisensäure, Formamid, Pyridin, Dioxan, Methan (einschließlich Clathrat), Ethan, Butan, Isobutan, Hexan, Cyclohexan, Acetonitril, Acetamid, ε-Caprolactam, Crotonsäure, Phenol und deren Gemischen ausgewählt ist.

8. Verfahren nach irgendeinem vorhergehenden Anspruch, worin das Dispergiermittel aus polymeren Polyelektrolyten auf Acrylsäure-Basis, oxidierten Triglyceriden, Sorbitan-Estern, Phosphat-Ethern, Bernsteinsäure-Diestern, Aminoxiden, Alkylbetainen, Verbindungen auf Silicium-Basis und deren Gemischen ausgewählt ist.

9. Verfahren nach irgendeinem der Ansprüche 1 bis 7, worin das Dispergiermittel aus einem kationischen Polypropoxy-quaternären Ammoniumacetat, Fischöl, Sorbitantrioleat, Sorbitanmonooleat, einem anionischen Polyoxyethylen-nonylphenoletherphosphat, einem Dioctylester von Natrium-sulfobernsteinsäure, γ-Aminopropylmethoxysilan und deren Gemischen ausgewählt ist.

10. Verfahren nach Anspruch 2 oder irgendeinem der Ansprüche 3 bis 9, soweit sie auf Anspruch 2 bezogen sind, worin die Temperatur der Form vor dem Einspritzen der Aufschlämmung erniedrigt wird.

11. Verfahren nach irgendeinem vorhergehenden Anspruch, worin die Aufschlämmung weiterhin ein Gleitmittel zum Entformen enthält.

12. Verfahren nach Anspruch 11, worin das Gleitmittel aus Ölsäure, Stearinsäure, Polyethylenglycol und deren Gemischen ausgewählt ist.

13. Verfahren nach irgendeinem vorhergehenden Anspruch, worin das Dispergiermittel in einer Menge von etwa 0,5 Gew.-% bis etwa 5,0 Gew.-% der Aufschlämmung vorliegt.

14. Verfahren nach irgendeinem vorhergehenden Anspruch, worin die Aufschlämmung weiterhin ein Sinterungs-Hilfsmitel enthält.

15. Verfahren nach irgendeinem vorhergehenden Anspruch, worin die Teilchen eine Größe von 0,1 × 10⁻⁶ bis 150 × 10⁻⁶ m haben.

## Revendications

1. Procédé pour la mise en forme d'un article comprenant tes étapes suivantes :
(a) fournir une suspension bien répartie comprenant des particules inorganiques frittables, un liquide porteur non aqueux et un dispersant,
(b) mettre en forme la suspension,
(c) abaisser la température pour transformer la suspension mise en forme en une pièce solidifiée,
(d) démouler et sécher la pièce solidifiée obtenue afin d'obtenir un article cru (non cuit), et
(e) fritter l'article cru (non cuit) afin d'obtenir l'article désiré, caractérisé en ce que la suspension contient au moins 35% en volume de particules inorganiques frittables et a une viscosité ne dépassant pas 1,0 Pa.s à 100 S⁻¹, en ce que la suspension est mise en forme à une pression ne dépassant pas 6,9 x 10⁶ Pa et en ce que le changement de volume pendant la congélation n'excède pas ± 10%, de sorte que la densité de l'article fritté est au moins égale à 95% de la densité théorique.

2. Procédé tel que revendiqué dans la revendication 1, dans lequel la suspension est mise en forme par moulage par injection.

3. Procédé tel que revendiqué dans la revendication 1 ou 2, dans lequel les particules sont présentes à raison de 35 à 50 en volume.

4. Procédé tel que revendiqué dans les revendications 1, 2 ou 3, dans lequel la densité de l'article fritté est au moins 99% de la densité théorique.

5. Procédé tel que revendiqué dans les revendications 1, 2, 3 ou 4, dans lequel les particules sont choisies parmi : les oxydes, carbures, nitrures, siliciures, borures, silicates, titanates, zirconates, et leurs mélanges, d'aluminium, de baryum, beryllium, bore, calcium, lanthane, plomb, silicium, tungstène, titane, zirconium, et leurs mélanges.

6. Procédé tel que revendiqué dans les revendications 1, 2, 3 ou 4, dans lequel les particules sont choisies parmi : aluminium, nickel, fer, titane, cuivre, tungstène, molybdène, beryllium, et leurs mélanges et alliages.

7. Procédé tel que revendiqué selon l'une quelconque des revendications précédentes, dans lequel le liquide porteur non-aqueux est choisi parmi : propanal, méthyléthylcétone, cyclohexanone, méthanol, éthanol, propanol, glycérol, alcool de néopentyle, acide formique, formamide, pyridine, dioxane, méthane (y compris clathrate), éthane, butane, isobutane, hexane, cyclohexane, acétonitrile, acétamide, epsiloncaprolactame, acide crotonique, phénol et leurs mélanges.

8. Procédé tel que revendiqué dans l'une quelconque des revendications précédentes, dans lequel le dispersant est choisi parmi : polyélectrolytes polymères à base d'acide acrylique, triglycérides oxydés, esters sorbitan, éthers de phosphate, diesters d'acide succinique, oxydes d'amines, alkylbétaines, composés à base de silicium, et leurs mélanges.

9. Procédé tel que revendiqué dans l'une quelconque des revendications 1 à 7, dans lequel le dispersant est choisi parmi : un acétate d'ammonium quaternaire cationique de polypropoxy, de l'huile de poisson, du tri-oléate sorbitan, du mono-oléate sorbitan, un phosphate anionique d'éther polyoxyéthylène nonylphényle, un ester de sodium dioctyle d'acide sulfosuccinique, du silane de gamma-aminopropylométhoxylique et leurs mélanges.

10. Procédé tel que revendiqué dans la revendication 2, ou dans l'une quelconque des revendications 3 à 9 si celles-ci dépendent de la revendication 2, dans lequel la température du moule est abaissée avant l'injection de la suspension.

11. Procédé tel que revendiqué dans l'une quelconque des revendications précédentes, dans lequel la suspension comprend également un lubrifiant démoulant.

12. Procédé tel que revendiqué dans la revendication 11, dans lequel le lubrifiant est choisi parmi : acide oléique, acide stéarique, polyéthylène glycol, et leurs mélanges.

13. Procédé tel que revendiqué dans l'une quelconque des revendications précédentes, dans lequel le dispersant est présent à raison environ de 0,5 % en poids à environ 5,0 % en poids de la suspension.

14. Procédé tel que revendiqué dans l'une quelconque des revendications précédentes, dans lequel la suspension comprend également un activateur de frittage.

15. Procédé tel que revendiqué dans l'une quelconque des revendications précédentes, dans lequel les particules ont une taille allant de 0,1x10⁻⁶ à 150x10⁻⁶ m.
